(19) Europäisches Patentamt / European Patent Office / Office européen des brevets

(11) **EP 4 175 406 A1**

(12) **EUROPEAN PATENT APPLICATION**
published in accordance with Art. 153(4) EPC

(43) Date of publication:
**03.05.2023 Bulletin 2023/18**

(21) Application number: **21828037.8**

(22) Date of filing: **25.05.2021**

(51) International Patent Classification (IPC):
**H04W 76/28** (2018.01)     **H04W 76/10** (2018.01)
**H04W 56/00** (2009.01)

(52) Cooperative Patent Classification (CPC):
**H04W 56/00; H04W 76/10; H04W 76/28**

(86) International application number:
**PCT/CN2021/095878**

(87) International publication number:
**WO 2021/258962 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020  CN 202010589920**

(71) Applicant: **ZTE Corporation**
**Shenzhen, Guangdong 518057 (CN)**

(72) Inventors:
• **XU, Hongbin**
  **Shenzhen, Guangdong 518057 (CN)**
• **XU, Junling**
  **Shenzhen, Guangdong 518057 (CN)**

(74) Representative: **Deambrogi, Edgardo et al**
**Jacobacci & Partners S.p.A.**
**Corso Emilia 8**
**10152 Torino (IT)**

(54) **DATA ISSUING METHOD, AND DEVICE AND STORAGE MEDIUM**

(57) Provided are a data issuing method and device, and a storage medium, which belong to the technical field of communications. The method comprises: determining DRX state information respectively corresponding to a fourth-generation evolved node base station (eNB) and a 5G base station (gNB) according to DRX information of user equipment (UE); and determining a data receiving end according to the DRX state information, and issuing data to be synchronized to the data receiving end, so as to instruct the data receiving end to issue the data to be synchronized to the UE, wherein the data receiving end is one or both of the eNB and the gNB. The technical solution of the present disclosure can avoid the occurrence of negative gain and ensure the timeliness of data.

S101

Determine DRX state information respectively corresponding to a fourth-generation evolved node base station (eNB) and a 5G node base station (gNB) according to DRX information of user equipment (UE)

S102

Determine a data receiving end according to the DRX state information, and issue data to be synchronized to the data receiving end, so as to instruct the data receiving end to issue the data to be synchronized to the UE, wherein the data receiving end is one or both of the eNB and the gNB

Fig.1

## Description

### Technical Field

The present disclosure relates to the technical field of communications, and in particular, relates to a data issuing method and device, and a storage medium.

### Background

There are two deployment manners for 5G NR, which are stand alone (SA) and non-stand alone (NSA) respectively, wherein NSA is achieved by means of an EN-DC (E-UTRA-NR Dual Connectivity) technology, and can rapidly complete the construction of 5G sites by using the existing 4G LTE base stations.

Currently, the mainstream NSA topological structure at home and abroad is an option3x structure, and data shunting is achieved according to a protocol standard about EN-DC formulated by 3GPP. Specifically, when EN-DC shunting is performed, when a 5G flow control module distributes data to eNB RLC and gNB RLC, the data is directly issued to the eNB RLC and/or the gNB RLC, so that the eNB RLC and/or the gNB RLC issue the received data to an associated UE end.

However, as the UE has a DRX mechanism, the UE cannot perform data receiving at all moments, that is, the eNB RLC and/or the gNB RLC may have situations in which the data cannot be issued after being received, so that a negative gain occurs, thereby affecting the system and affecting the entire TCP service.

Therefore, there is an urgent need for a data issuing method capable of reducing generation of negative gain while issuing data in time.

### Summary

A main object of embodiments of the present disclosure is to provide a data issuing method and a storage medium, so as to avoid the generation of negative gain and ensure the timeliness of data.

In order to achieve the described object, embodiments of the present disclosure provide a data issuing method. The method includes the following steps: according to DRX information of user equipment (UE), DRX state information respectively corresponding to a fourth-generation evolved node base station (eNB) and a 5G node base station (gNB) is determined; and a data receiving end is determined according to the DRX state information, and data to be synchronized is issued to the data receiving end, so as to instruct the data receiving end to issue the data to be synchronized to the UE, wherein the data receiving end is one or both of the eNB and the gNB.

In order to achieve the described object, embodiments of the present disclosure further provide a data issuing device. The device includes a memory and a processor; wherein the memory is configured to store a computer program; and the processor is configured to execute the computer program, and implement the steps of the data issuing method as described above when executing the computer program.

In order to achieve the described object, the present disclosure provides a storage medium, configured to be computer-readable storage, wherein the storage medium stores one or more programs, and the one or more programs can be executed by one or more processors to implement the steps of the data issuing method as described above.

In the data issuing method and device, and the storage medium provided by the present disclosure, when a data synchronization instruction is received, DRX information of the user equipment (UE) is acquired; then according to the acquired DRX information, whether a current corresponding data receiving end is an eNB or a gNB is determined; and then after the data receiving end is determined, the data to be synchronized is received, and the data receiving end is instructed to issue the received data to be synchronized to the user equipment (UE). During data synchronization, a request for a data amount is performed on a flow control OMG module PDCP of a gNB according to the current DRX state of the UE, and data information is issued by selecting an appropriate end in an activated state, thereby avoiding negative gain caused by state inconsistency at two sides, and ensuring the timeliness of data.

### Brief Description of the Drawings

In order to illustrate technical solutions of embodiments of the present disclosure more clearly, hereinafter, accompanying drawings requiring to be used in the description of the embodiments will be briefly introduced. Apparently, the accompanying drawings in the following description merely relate to some embodiments of the present disclosure, and for a person of ordinary skill in the art, other accompanying drawings can also be obtained according to these accompanying drawings without involving any inventive effort.

Fig. 1 is a schematic flowchart of a data issuing method provided by an embodiment of the present disclosure;

Fig. 2 is a schematic diagram of a DRX principle provided by an embodiment of the present disclosure;

Fig. 3 is a schematic flowchart of steps of determining DRX state information provided by an embodiment of the present disclosure;

Fig. 4 is a schematic flowchart of a typical long and short DRX cycle provided by an embodiment of the present disclosure;

Fig. 5 is a schematic flowchart of steps of determining DRX state information provided by an embodiment of the present disclosure; and

Fig. 6 is a schematic block diagram of the structure of a data issuing device provided by an embodiment of the present disclosure.

**Detailed Description of the Embodiments**

Hereinafter, the technical solutions in the embodiments of the present disclosure will be described clearly and thoroughly with reference to the accompanying drawings of the embodiments of the present disclosure. Obviously, the embodiments as described are only some of the embodiments of the present disclosure, and are not all of the embodiments. On the basis of the embodiments in the present disclosure, all other embodiments obtained by a person of ordinary skill in the art without any inventive effort shall all fall within the scope of protection of the present disclosure.

The flowcharts as shown in the accompanying drawings are merely illustrative, do not necessarily include all of the contents and operations/steps, nor do they necessarily have to be performed in the order described. For example, some operations/steps may be decomposed, combined, or merged, and thus the sequence of actual execution may vary according to the actual situations.

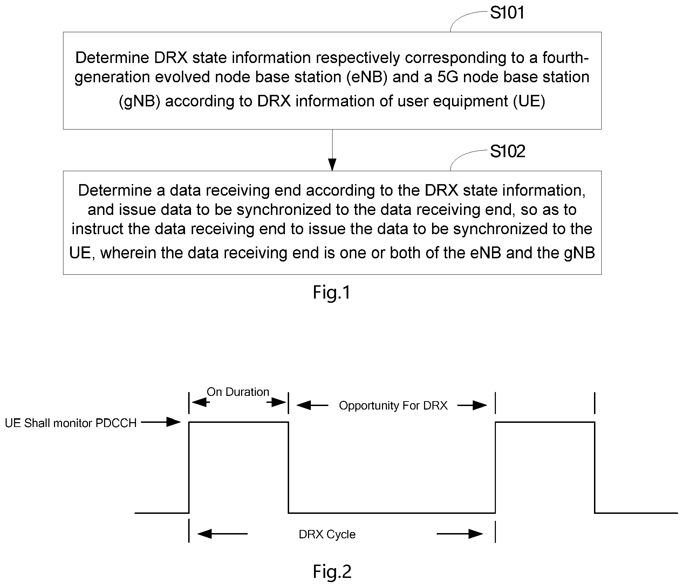

As shown in Fig. 1, Fig. 1 is a schematic flowchart of a subscription message processing method of an IP multimedia subsystem provided by an embodiment of the present disclosure. The method includes the following steps: step S101, according to DRX information of user equipment (UE), DRX state information respectively corresponding to a fourth-generation evolved node base station (eNB) and a 5G node base station (gNB) is determined.

DRX, full name in English is Discontinuous Reception. This method can enable the user equipment (UE) to periodically enter a sleep state at certain time without monitoring PDCCH sub-frames, and enable the user equipment to wake up from the sleep state to enter an activated state when monitoring is required, and in this way, the UE can achieve the purpose of power saving.

Atypical DRX cycle can be as shown in figure 2, in which one DRX cycle is composed of "On Duration" and "Opportunity for DRX", and in "On Duration" time, the UE monitors and receives PDCCH sub-frames; and in "Opportunity for DRX" time, the UE will not monitor and receive PDCCH sub-frames.

In addition, with regard to a DRX cycle, a system may configure different cycles for the UE according to different service scenarios, thereby generating a short cycle (short DRX cycle) or a long cycle (long DRX cycle). For example, when a VOIP service is performed, a voice codec generally sends a VOIP packet every 20 ms, and thus a short DRX cycle with a length of 20 ms can be configured; and a long DRX cycle can be configured in a voice call which has a long silence period.

However, with regard to the long cycle and the short cycle, the short cycle itself has the characteristic of quickly responding to downlink data transmission, and thus when data issuing is performed, the data issuing is more targeted to the long cycle; DRX states of the eNB and the gNB are determined by acquiring DRX information of the UE within a long cycle, and then how to issue data is determined according to the acquired DRX states.

Therefore, when there is data requiring to be synchronized, DRX state information respectively corresponding to the eNB and the gNB will be determined according to the DRX information of the user equipment (UE), wherein the DRX state information includes a sleep state and an activated state, when data synchronization needs to be performed, the DRX state information respectively corresponding to the eNB and the gNB is firstly determined, and then how to synchronize data information is determined according to the acquired DRX state information.

In actual applications, for a 4G base station and a 5G base station, the base stations are respectively configured with DRX configurations corresponding thereto, and due to different DRX configurations, DRX states of the base stations, determined according to the DRX information of the UE, are also different. That is, during connection and communication with the UE, the base stations will also have data issuing states corresponding thereto at the same moment.

In some embodiments, when it is determined how to conduct data issuing and synchronization, relevant data information of the UE needs to be acquired, and therefore when a data synchronization instruction is received, flow control reporting modules RLC respectively contained in the eNB and the gNB are controlled to acquire DRX information of the user equipment (UE).

In fact, corresponding communication connections are established between the UE, and both the eNB and the gNB, the eNB and the gNB issue data traffic packets required to be issued to the UE according to actual situations, so that different services are responded on the UE. Each of the eNB and the gNB includes a flow control module PDCP and a flow control reporting module RLC respectively corresponding thereto, and when issuing of data traffic packets is performed, the issuing is achieved by the flow control module PDCP at the gNB side; and when data issuing is performed, the flow control reporting module firstly receives the data traffic packets sent by the flow control module, and then issues the received data traffic packets to the UE. However, the flow control modules are not aware of the states (probably an activated period, and may also be a sleep period) of RLC respectively corresponding to the eNB and gNB, and therefore, DRX states of the eNB and the gNB with respect to the UE need to be firstly determined, wherein the DRX states are determined according to the DRX information of the UE. Therefore, the flow control reporting modules respectively corresponding to the eNB and the gNB need to be controlled to acquire DRX information of the UE, and then according to different DRX configurations configured therefor, which end is currently selected to issue the data traffic packets is determined.

Generally, the DRX configurations include: on_duration, a drx-inactivity duration, a long/short cycle duration, a drxShortCycle duration, a drxStartOffset, etc., which are not exemplified one by one. Due to different DRX configurations, the eNB and the gNB will have situations of different state information at the same moment.

Step S102, a data receiving end is determined according to the DRX state information, and data to be synchronized is issued to the data receiving end, so as to instruct the data receiving end to issue the data to be synchronized to the UE, wherein the data receiving end is one or both of the eNB and the gNB.

By determining the DRX state information respectively corresponding to the eNB and the gNB and selecting a data receiving end which is appropriately configured to perform data issuing, after the data receiving end is determined, the data to be synchronized is controlled to be issued to the data receiving end, and then the data receiving end is instructed to issue the received data to be synchronized to the UE.

When determining the DRX state information respectively corresponding to the eNB and the gNB according to the DRX information of the UE, the DRX state information of the eNB and the gNB may be activated states, and may also be sleep states; and when receiving and issuing data, the data can be received and issued only in the activated state, and therefore by identifying the DRX state information of the eNB and the gNB, an appropriate data receiving end is selected to perform data issuing.

In some embodiments, when determining the data receiving end, the method includes: when first DRX state information is a sleep state and second DRX state information is an activated state, then the gNB is determined as the data receiving end; when the first DRX state information is an activated state and the second DRX state information is a sleep state, the eNB is determined as the data receiving end; and when both the first DRX state information and the second DRX state information are activated states, the gNB and the eNB are determined as the data receiving ends.

When the DRX state information is an activated state, it is determined that the data can be received and issued, and no matter whether the data receiving end is the eNB or the gNB at this time, the data can be received and issued. Moreover, when both the state information are in activated states, how to receive and issue data can be determined according to actual situations, for example, according to radio capabilities respectively corresponding to the eNB and the gNB, that is, data receiving and issuing capabilities.

In addition, it should be noted that the situation that the eNB and the gNB are in sleep states at the same time will hardly occur, but this situation is not impossible to occur; and when this situation occurs, data will not be received and issued, and then data will be received and issued until one of the parties is in an activated state.

In some embodiments, when data receiving and issuing are performed, the eNB and the gNB are not only connected to the current UE, but also connected to several other UE, so as to satisfy service requirements of different UE. Therefore, when receiving and issuing data, not all the radios of the eNB or the gNB can be directly used to perform data receiving and issuing, but the data is received and issued in time according to the current radio capabilities of the eNB and the gNB.

When the data receiving end for data receiving and issuing is determined, when there is only one port that can be configured to receive and issue data at the current moment, selection of a data issuing end will not be involved, and the currently available end is directly used to receive and issue data. When it is determined that both the eNB and the gNB can serve as data receiving ends to receive and issue data, data issuing amounts respectively corresponding to the eNB and the gNB will be determined according to radio capabilities respectively corresponding to the eNB and the gNB, so that the eNB and the gNB receive and issue data according to their respective corresponding data issuing.

For example, the data requiring to be synchronized currently is 200 Mbps, and the current radio capabilities of the gNB and the eNB are 1.0 Gbps (equal to 1024 Mbps) and 100 Mbps respectively. In this case, a proper allocation manner can be selected according to respective radio capabilities. For example, the gNB and the eNB are both 100 Mbps, or the allocation manner may be only suitable for the gNB, that is, the gNB is 200 Mbps, or there may also be other allocation manners. However, since the gNB has a more rapid data processing capability, when receiving and issuing data according to a radio capability, the gNB may be preferentially selected as a data processing end to receive and issue data. That is, at this time, the allocation manner of corresponding data traffic packets may be that the gNB is 200 Mbps and the eNB is 0, but this does not mean that the allocation manner can only be this manner.

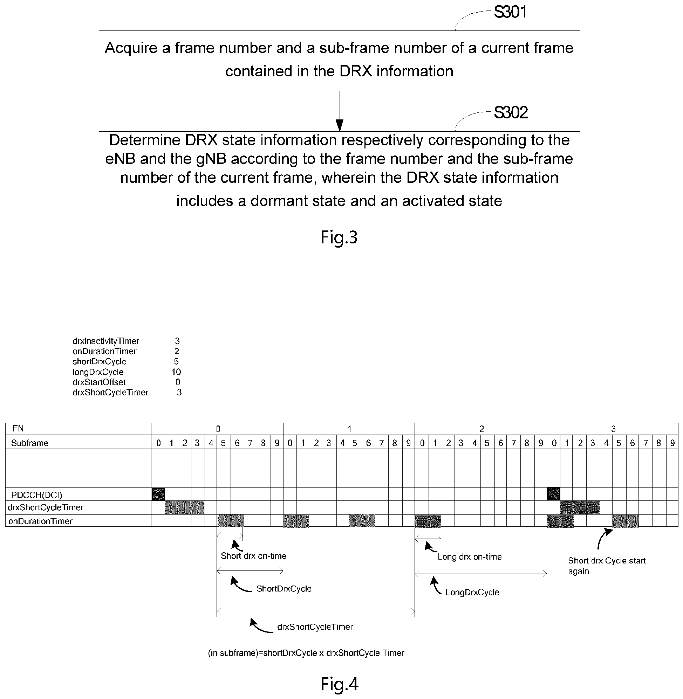

Referring to Fig. 3, Fig. 3 is a schematic flowchart of steps of determining DRX state information provided by an embodiment of the present disclosure.

The step that according to DRX information of user equipment (UE), DRX state information respectively corresponding to a fourth-generation evolved node base station (eNB) and a 5G node base station (gNB) is determined, includes step S301 to step S302.

Step S301, a frame number and a sub-frame number of a current frame contained in the DRX information are acquired.

After DRX information of the user equipment (UE) is obtained in response to a data synchronization instruction, relevant information contained in the DRX information will be identified and acquired, so as to determine DRX state information corresponding to the eNB and the gNB. Therefore, after the DRX information is obtained, the frame number and sub-frame number of the current frame contained in the DRX information are acquired, and then the DRX state information corresponding to the eNB and the gNB is determined according to the acquired frame number and sub-frame number of the current frame.

A typical long and short DRX cycle flow includes several long cycles and short cycles, and corresponding configurations and parameters are set for the long and short cycles. A long and short DRX cycle flow is as shown in Fig. 4. For a long and short cycle, the short cycle corresponds to a ShortDrxCycle, the long cycle corresponds to a LongDrxCycle, and includes several sub-frames which are stored in a corresponding system frame, wherein each sub-frame is as long as 1ms, regarding FDD (Frequency-division Duplex, this mode refers to a frequency-division duplex mode) and TDD (Time-division duplex, this mode refers to a time-division duplex mode), the number range of system frames is 0-1023, and the number range of sub-frames in a system frame is 0-9, and each system frame is as long as 10 ms and consists of 10 sub-frames.

It can be determined from figure 4 that the UE successfully decodes a PDCCH sub-frame at a moment (0, 0), in which (0, 0) represents a sub-frame with a sub-frame number of 0 in a system frame with a frame number of 0, and therefore a drx-inactivity Timer (having the length of three sub-frames) is started; when the drx-inactivity Timer times out, a drxShortCycle Timer is started (note that, in this case, the drxShortCycle Timer should be started at sub-frame no. 4, rather than started at sub-frame no. 5); then when moment (0, 5) arrives, a time condition for entering the short cycle is satisfied, the UE will be woken up to enter on duration (continuing for 2 sub-frames), and enter the short cycle multiple times at moment (1, 0) and moment (1, 5); then when moment (1, 9) arrives, since a PDCCH sub-frame is not successfully decoded in (drxShortCycle Timer X shortDrxCycle) = 15 sub-frames, the UE prepares to enter a long DRX cycle; and when a long cycle entering condition is satisfied at moment (2, 0), the UE enters the long DRX cycle, and ends the long cycle at moment (2, 9), and the UE receives the PDCCH sub-frame at moment (3, 0), and thus restarts the drx-inactivity Timer.

With regard to a typical long and short DRX cycle flow, the state of the UE changes constantly over time; and as the DRX configuration of a system/device is fixed, when determining that compared with a certain system/device, whether in an activated state or a sleep state at the current moment can be determined according to some parameters currently obtained. For example, in the sleep state at moment (0, 8), and in the activated state at moment (2, 1).

Therefore, in some embodiments, after DRX information of the UE is acquired, a frame number and a sub-frame number of a current frame contained in the DRX information are acquired, and then DRX state information corresponding to the eNB and the gNB is determined according to the frame number and the sub-frame number of the current frame.

The short cycle has the characteristic of timely data response, and thus when performing shunting and issuing, the main scenario targeted thereby is a long cycle. With regard to a long cycle, when determining DRx states corresponding to the eNB and the gNB, it is actually determining whether the eNB and the gNB enter activated states under the DRX information of the UE, and therefore at this time, it is determined whether in corresponding an activated state at a moment corresponding to the current frame and the sub-frame.

Step S302, according to the frame number and the sub-frame number of the current frame, DRX state information respectively corresponding to the eNB and the gNB is determined, wherein the DRX state information includes a sleep state and an activated state.

After the frame number and the sub-frame number of the current frame are obtained, the DRX state information corresponding to the eNB and the gNB is determined according to DRX configurations corresponding thereto, and then an appropriate data receiving and issuing manner is selected to achieve data shunting processing.

When the state information at the moment corresponding to the current frame and the sub-frame is determined, the state information can be obtained according to the following formula, the formula is:

$$drxOffset = [(SFN \times 10) + subFrameNumber] \% longDRX\_Cycle_;$$

where *drxOffset* is a calculation result corresponding to the moment corresponding to the current frame and the subframe, *SFN* is a frame number of the current frame, *subFrameNumber* is a sub-frame number corresponding to the current frame, *longDRX _ Cycle* is a long DRX cycle, and a cycle unit is millisecond (ms). A corresponding *drxOffset* is obtained by means of performing Modulo on *longDRX _Cycle*.

After obtaining *drxOffset* , when determining whether in an activated state, *drxOffset* is compared with corresponding *drxStartOffset* , and when the two are equal, it is determined that an activated state is entered, but it is not only when the two are equal that it indicates that an activated state is entered. Since the moment in an activated state in one DRX cycle is not only a moment corresponding to one frame and a sub-frame, and therefore a numerical value range in an activated state can be determined, and when *drxOffset* is within the numerical value range, it indicates in an activated state; otherwise, in a sleep state, wherein *drxStartOffset* is the initial value of the DRX cycle, and the numerical value range is (0, *longDRX _ Cycle* -1).

For example, when *longDRX _ Cycle* is 320 ms, *drxStartOffset* is 9 and *on _ Duration* is 10, then at this time, when *drxOffset* is in the range of 9 to 18, it is determined in an activated state.

Therefore, when the DRX state information respectively corresponding to the eNB and the gNB is determined according to the frame number and sub-frame number of the current frame contained in the DRX information of the UE, the DRX configuration information of the eNB and the gNB is acquired, so as to perform corresponding calculation and processing, and to determine the DRX state information corresponding to the eNB and the gNB according to the obtained result information.

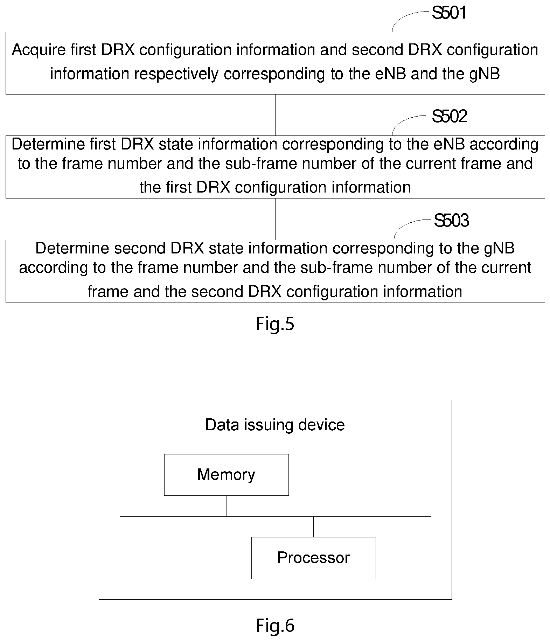

Referring to Fig. 5, Fig. 5 is a schematic flowchart of steps of determining DRX state information by an embodiment of the present disclosure.

The step that according to the frame number and the sub-frame number of the current frame, DRX state information respectively corresponding to the eNB and the gNB is determined, includes step S501 to step S503.

Step S501, the first DRX configuration information and the second DRX configuration information respectively corresponding to the eNB and the gNB are acquired;

step S502, the first DRX state information corresponding to the eNB is determined according to the frame number and the sub-frame number of the current frame and the first DRX configuration information; and

step S503: the second DRX state information corresponding to the gNB is determined according to the frame number and the sub-frame number of the current frame and the second DRX configuration information.

It can be determined from the description above that when the DRX state information respectively corresponding to the eNB and the gNB is determined, in addition to acquiring the DRX information of the UE, it is also necessary to determine the state information according to the DRX configuration information respectively corresponding to the eNB and the gNB; therefore, at this time, the first DRX configuration information and the second DRX configuration information respectively corresponding to the eNB and the gNB will be acquired, then the first DRX state information corresponding to the eNB is determined according to the obtained frame number and sub-frame number of the current frame and the first DRX configuration information, and the second DRX state information corresponding to the gNB is determined according to the obtained frame number and sub-frame number of the current frame and the second DRX configuration information.

When determining the DRX state information respectively corresponding thereto, first, the result information corresponding to the frame number and sub-frame number of the current frame can be obtained through calculation according to the calculation formula as described above, and then the obtained result information is compared with information corresponding to the corresponding activated state, so as to determine the state information respectively corresponding to the eNB and the gNB, i.e. whether in an activated state.

In some embodiments, when determining DRX state information corresponding to the eNB according to the frame number and the sub-frame number of the current frame, the method includes: a first DRX cycle and a first virtual activated period contained in the first DRX configuration information are acquired; according to the frame number and the sub-frame number of the current frame and the first DRX cycle, whether it is currently in the first virtual activated period is determined; when it is determined in the first virtual activated period, it is determined that the first DRX state information is an activated state; and when it is determined not in the first virtual activated period, it is determined that the first DRX state information is a sleep state.

When DRX state information corresponding to the eNB is determined, a first DRX cycle and a recorded first activated period are acquired from first DRX configuration information, wherein the first DRX cycle is a long cycle corresponding to the eNB, and then calculation is performed according to the obtained frame number and sub-frame number of the current frame and the first cycle according to the calculation formula as described above, to obtain a corresponding calculation result, and then the obtained calculation result is compared with the first activated period, so as to determine a DRX state corresponding to the eNB.

Exemplarily, by comparing the calculated *drxOffset* with the first virtual activated period, when *drxOffset* is in the first virtual activated period, it is determined that the first DRX state information of the eNB is an activated state; otherwise, a sleep state.

For example, the DRX configuration is *longDRX _ Cycle* and is 320 ms, *drxStartOffset* is configured as 19, and the time length of *on_duration* is 15 ms. When the frame number of the current frame is 127 and the sub-frame number is 5, then according to the formula as described above, upon calculation, it is obtained that *drxOffset* = (127*10+5)%320 = 315, and the configuration is 19 to 33, then in a sleep state at this moment. When the current frame has a frame number of 129 and a sub-frame number of 9, then upon calculation, it is obtained that *drxOffset* = (129*10+9)*320 = 19, and at this time, it is equal to *drxStartOffset* , and it is considered in an activated state.

It should be noted that there is no specific sequential order between step S502 and step S503. It may be that step S502 is before step S503, or step S503 is before step S502, or step S502 and step S503 occur at the same time, which is not specifically limited.

In some embodiments, when determining DRX state information corresponding to the gNB according to the frame number and the sub-frame number of the current frame, the method includes: a second DRX cycle and a second activated period contained in the second DRX configuration information are acquired; according to the frame number and the sub-frame number of the current frame, and the second DRX cycle, whether it is currently in the second activated period is determined; when it is determined in the second activated period, it is determined that the second DRX state information is an activated state; and when it is determined not in the second activated period, it is determined that the second DRX state information is a sleep state.

In an implementation process, the process is the same as the process of obtaining the first state information corresponding to the eNB, and the difference merely lies in that the judgment object changes from eNB to gNB; whether in the second activated period corresponding to the gNB is determined by using the frame number and the sub-frame number of the current frame, and when it is determined in the second activated period, it is determined that the second DRX state information is an activated state; and otherwise, a sleep state.

In some embodiments, due to the delay of link and data transmission, before the data is issued, data traffic packets requiring to be issued can be sent to the eNB and/or the gNB in advance, and then when the eNB and/or the gNB enter activated states, the data traffic packets requiring to be issued can be issued to the corresponding UE at the first time.

Therefore, after calculation is performed according to the described manner to obtain *drxOffset* , the activated state next time can be predicted, so that when there are data traffic packets to be issued, the data traffic packets can be sent to the eNB and/or the gNB in advance. In a practical application process, the prediction may be performed by 10 sub-frames (which is not specifically limited) in advance, for example, when it is determined that *drxOffset* of entering the activated state ＿ 19, it can be determined whether there are data traffic packets requiring to be issued at the moment corresponding to *drxOffset* = 9; and when it is determined that there are data traffic packets requiring to be issued, the data traffic packets requiring to be issued are acquired from the flow control module PDCP of the gNB, so as to store same in the flow control reporting module RLC of the gNB and/or the eNB.

Exemplarily, by performing prediction in advance, it is ensured that data sent from the PDCP to the RLC can be sent to the UE side in time; and with regard to the moment for prediction, when prejudgment is performed by 10 sub-frames in advance, then prejudgment is performed in the following manner according to the result calculated according to the DRX state calculation formula as described above.

$$drxOffsetFinal = drxOffset - 10, \quad drxOffset \geq 10 ;$$

and

$$drxOffsetFinal = longDRX \_ Cycle - 10 + drxOffset , drxOffset < 10 .$$

*drxOffsetFinal* is a moment for prediction, and the prediction is performed with regard to the next DRX cycle; therefore, by using the described manner, after the state information in the current DRX cycle is determined, the moment when the RLC makes a data request to the PDCP in the next DRX cycle can be determined according to the actual state.

In the data issuing method and device and readable storage medium as described above, when a data synchronization instruction is received, DRX information of the user equipment (UE) is acquired; then according to the acquired DRX information, whether a current corresponding data receiving end is an eNB or a gNB is determined; and then after the data receiving end is determined, the data to be synchronized is received, and the data receiving end is instructed to issue the received data to be synchronized to the user equipment (UE). During data synchronization, a request for a data amount is performed on a flow control OMG module PDCP of a gNB according to the current DRX state of the UE, and data information is issued by selecting an appropriate end in an activated state, thereby avoiding negative gain caused by state inconsistency at two sides, and ensuring the timeliness of data.

Referring to Fig. 6, Fig. 6 is a schematic block diagram of the structure of a data issuing device provided by an embodiment of the present disclosure.

Exemplarily, the electronic device may be a mobile phone, a tablet, a notebook, a desktop computer, a television, a dedicated input device, a cash dispenser, etc.

The device further includes a processor and a memory, wherein the memory is configured to store a computer program; and

the processor is configured to execute the computer program and implement any one of the data issuing methods provided in the embodiments of the present disclosure when executing the computer program.

It should be understood that the processor may be a Central Processing Unit (CPU), and the processor may also be another general-purpose processor, a Digital Signal Processor (DSP), and an Application Specific Integrated Circuit (ASIC), a Field-Programmable Gate Array (FPGA), or other programmable logic device, a discrete gate or transistor logic device, a discrete hardware assembly, etc. The general-purpose processor may be a microprocessor, or the processor may also be any conventional processor, etc.

Embodiments of the present disclosure further provide a computer-readable storage medium. The computer-readable storage medium stores a computer program, and when the computer program is executed by the processor, the processor implements the network deployment method for an autonomous system (AS) according to any one of the embodiments of the present disclosure.

A person of ordinary skill in the art could understand that the functional modules/units in all or some of the steps, systems and apparatuses of the methods disclosed above can be implemented as software, firmware, hardware, and any suitable combination thereof. In a hardware embodiment, the division of functional modules/units mentioned in the description above does not necessarily correspond to the division of physical assemblies; for example, one physical assembly may have multiple functions, or one function or step may be performed cooperatively by several physical assemblies. Some or all of the physical assemblies may be implemented as software executed by a processor, such as a central processing unit, a digital signal processor, or a microprocessor, or implemented as hardware, or implemented as an integrated circuit, such as an application specific integrated circuit. Such software may be distributed on a computer-readable storage medium which may include a computer storage medium (or non-transitory medium) and a communication medium (or transitory medium).

As is well known to a person of ordinary skill in the art, the term computer-readable storage medium includes transitory and non-transitory, removable and non-removable medium implemented in any method or technology for storing information (such as computer-readable instructions, data structures, program modules, or other data). The computer-readable storage medium includes but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage apparatuses, or any other medium which can be used to store desired information and can be accessed by a computer. In addition, as is well known to a person of ordinary skill in the art, the communication medium typically includes computer-readable instructions, data structures, program modules, or other data in a modulated data signal such as a carrier or other transmission mechanisms, and may include any information delivery medium.

Exemplarily, the computer-readable storage medium may be an internal storage unit of the electronic device as described in the embodiments above, for example, a hard disk or a memory of the electronic device. The computer-readable storage medium may also be an external storage device of the electronic device, for example, a plug-in hard disk, a Smart Media Card (SMC), a Secure Digital (SD) card, and a Flash Card, etc. which are equipped on the electronic device.

The electronic device and the computer-readable storage medium provided in the described embodiments display at least two virtual keyboards in different display areas on a display screen when a user inputs information, so that information can be input by the at least two virtual keyboards; and the difficulty of predicting input information by monitoring the state of a sensor by means of a malware is increased, thereby enhancing the security of information input.

The content above merely relates to specific embodiments of the present disclosure, and the scope of protection of the present disclosure is not limited thereto. A person skilled in the art would have readily conceived of various equivalent modifications or replacements within the technical scope disclosed in the present disclosure, and these modifications or replacements shall all fall within the scope of protection of the present disclosure. Therefore, the scope of protection of the present disclosure shall be subject to the scope of protection of the claims.

**Claims**

1.  A data issuing method, comprising:

    determining DRX state information respectively corresponding to a fourth-generation evolved node base station (eNB) and a 5G base station (gNB) according to DRX information of user equipment (UE); and
    determining a data receiving end according to the DRX state information, and issuing data to be synchronized to the data receiving end, so as to instruct the data receiving end to issue the data to be synchronized to the UE, wherein the data receiving end is one or both of the eNB and the gNB.

2.  The data issuing method according to claim 1, wherein before determining DRX state information respectively corresponding to a fourth-generation evolved node base station (eNB) and a 5G base station (gNB) according to DRX information of user equipment (UE), the method further comprises:
    receiving a data synchronization instruction, and controlling flow control reporting modules RLC of the eNB and the gNB to acquire DRX information of the user equipment (UE).

3.  The data issuing method according to claim 1, wherein determining DRX state information respectively corresponding to a fourth-generation evolved node base station (eNB) and a 5G base station (gNB) according to DRX information of user equipment (UE) comprises:

    acquiring a frame number and a sub-frame number of a current frame contained in the DRX information; and
    determining the DRX state information respectively corresponding to the eNB and the gNB according to the frame number and the sub-frame number of the current frame, wherein the DRX state information comprises a sleep state and an activated state.

4.  The data issuing method according to claim 3, wherein determining DRX state information respectively corresponding to the eNB and the gNB according to the frame number and the sub-frame number of the current frame comprises:

    acquiring first DRX configuration information and second DRX configuration information respectively corresponding to the eNB and the gNB;
    determining the first DRX state information corresponding to the eNB according to a frame number and a sub-frame number of the current frame and the first DRX configuration information; and
    determining the second DRX state information corresponding to the gNB according to a frame number and a sub-frame number of the current frame and the second DRX configuration information.

5.  The data issuing method according to claim 4, wherein determining first DRX state information corresponding to the eNB according to the frame number and the sub-frame number of the current frame and the first DRX configuration information comprises:

    acquiring a first DRX cycle and a first activated period contained in the first DRX configuration information;
    determining whether it is currently in the first activated period according to the frame number and the sub-frame number of the current frame and the first DRX cycle;
    when it is determined in the first activated period, determining that the first DRX state information is the activated state; and
    when it is determined not in the first activated period, determining that the first DRX state information is the sleep state.

6.  The data issuing method according to claim 4, wherein determining second DRX state information corresponding to the gNB according to the frame number and the sub-frame number of the current frame and the second DRX configuration information comprises:

    acquiring a second DRX cycle and a second activated period contained in the second DRX configuration information;
    determining whether it is currently in the second activated period according to the frame number and the sub-frame number of the current frame, and the second DRX cycle;
    when it is determined in the second activated period, determining that the second DRX state information is the activated state; and
    when it is determined not in the second activated period, determining that the second DRX state information is the sleep state.

7. The data issuing method according to claim 4, wherein determining a data receiving end according to the DRX state information comprises:

when the first DRX state information is the sleep state and the second DRX state information is activated state, determining the gNB as the data receiving end;
when the first DRX state information is the activated state and the second DRX state information is the sleep state, determining the eNB as the data receiving end;
and when both the first DRX state information and the second DRX state information are activated states, determining the gNB and the eNB as the data receiving ends.

8. The data issuing method according to claim 7, wherein when both the first DRX state information and the second DRX state information are activated states, determining the gNB and the eNB as the data receiving ends, and issuing data to be synchronized to the data receiving end comprise:
according to radio capabilities respectively corresponding to the eNB and the gNB, determining data issuing amounts respectively corresponding to the eNB and the gNB, so as to issue the data to be synchronized according to the data issuing amounts respectively corresponding to the eNB and the gNB.

9. A data issuing device, comprising a memory and a processor;

wherein the memory is configured to store a computer program; and
the processor is configured to execute the computer program and implement the steps of the data issuing method according to any one of claims 1-8 when executing the computer program.

10. A storage medium, configured to be computer-readable storage, wherein the storage medium stores one or more programs, and the one or more programs can be executed by one or more processors to implement the steps of the data issuing method according to any one of claims 1-8.

S101

Determine DRX state information respectively corresponding to a fourth-generation evolved node base station (eNB) and a 5G node base station (gNB) according to DRX information of user equipment (UE)

S102

Determine a data receiving end according to the DRX state information, and issue data to be synchronized to the data receiving end, so as to instruct the data receiving end to issue the data to be synchronized to the UE, wherein the data receiving end is one or both of the eNB and the gNB

Fig.1

On Duration

Opportunity For DRX

UE Shall monitor PDCCH

DRX Cycle

Fig.2

S301

Acquire a frame number and a sub-frame number of a current frame contained in the DRX information

S302

Determine DRX state information respectively corresponding to the eNB and the gNB according to the frame number and the sub-frame number of the current frame, wherein the DRX state information includes a dormant state and an activated state

Fig.3

| drxInactivityTimer | 3 |
| onDurationTimer | 2 |
| shortDrxCycle | 5 |
| longDrxCycle | 10 |
| drxStartOffset | 0 |
| drxShortCycleTimer | 3 |

Fig.4

S501

Acquire first DRX configuration information and second DRX configuration information respectively corresponding to the eNB and the gNB

S502

Determine first DRX state information corresponding to the eNB according to the frame number and the sub-frame number of the current frame and the first DRX configuration information

S503

Determine second DRX state information corresponding to the gNB according to the frame number and the sub-frame number of the current frame and the second DRX configuration information

Fig.5

Data issuing device

Memory

Processor

Fig.6

## INTERNATIONAL SEARCH REPORT

| International application No. |
|---|
| **PCT/CN2021/095878** |

**A. CLASSIFICATION OF SUBJECT MATTER**

H04W 76/28(2018.01)i; H04W 76/10(2018.01)i; H04W 56/00(2009.01)i

According to International Patent Classification (IPC) or to both national classification and IPC

**B. FIELDS SEARCHED**

Minimum documentation searched (classification system followed by classification symbols)

H04W H04Q

Documentation searched other than minimum documentation to the extent that such documents are included in the fields searched

Electronic data base consulted during the international search (name of data base and, where practicable, search terms used)

CNABS, CNTXT, CNKI: DRX, 不连续接收, 基站, 节点, LTE, 4g, 4代, 四代, eNB, 5g, NR, 5代, 五代, gNB, 睡眠, 休眠, 非激活, 空闲, 激活, 唤醒, 工作, 状态, 选择; VEN, USTXT, WOTXT, EPTXT, 3GPP: DRX, base station, node B, LTE, 4g, eNB, 5g, NR, gNB, sleep, inactive, idle, active, alive, work, state, select, choose

**C. DOCUMENTS CONSIDERED TO BE RELEVANT**

| Category* | Citation of document, with indication, where appropriate, of the relevant passages | Relevant to claim No. |
|---|---|---|
| Y | CN 109618419 A (ZTE CORPORATION) 12 April 2019 (2019-04-12) description, paragraphs [0038]-[0271], and figures 1-20 | 1-10 |
| Y | CN 103841594 A (ZTE CORPORATION) 04 June 2014 (2014-06-04) description, paragraphs [0002]-[0020] | 1-10 |
| A | CN 107950056 A (INTEL IP CORP.) 20 April 2018 (2018-04-20) entire description | 1-10 |
| A | CN 108377548 A (CHINA TELECOM GLOBAL LIMITED) 07 August 2018 (2018-08-07) entire description | 1-10 |
| A | US 2015327169 A1 (SAMSUNG ELECTRONICS CO., LTD.) 12 November 2015 (2015-11-12) entire description | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 August 2021** | **02 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| :--- |
| **PCT/CN2021/095878** |

| Patent document cited in search report | | | Publication date (day/month/year) | Patent family member(s) | | | Publication date (day/month/year) |
| :--- | :--- | :--- | :--- | :--- | :--- | :--- | :--- |
| CN | 109618419 | A | 12 April 2019 | WO | 2020125133 | A1 | 25 June 2020 |
| CN | 103841594 | A | 04 June 2014 | WO | 2013189378 | A3 | 13 February 2014 |
| | | | | EP | 2914030 | A2 | 02 September 2015 |
| | | | | WO | 2013189378 | A2 | 27 December 2013 |
| | | | | EP | 2914030 | A4 | 23 March 2016 |
| | | | | EP | 2914030 | B1 | 28 March 2018 |
| | | | | CN | 103841594 | B | 10 May 2019 |
| | | | | US | 2015327323 | A1 | 12 November 2015 |
| CN | 107950056 | A | 20 April 2018 | US | 2020267607 | A1 | 20 August 2020 |
| | | | | CN | 107950056 | B | 23 February 2021 |
| | | | | US | 10652786 | B2 | 12 May 2020 |
| | | | | DE | 112016004567 | T5 | 05 July 2018 |
| | | | | US | 2018288657 | A1 | 04 October 2018 |
| | | | | WO | 2017062244 | A1 | 13 April 2017 |
| | | | | WO | HK1252892 | A0 | 06 June 2019 |
| CN | 108377548 | A | 07 August 2018 | CN | 108377548 | B | 20 April 2021 |
| US | 2015327169 | A1 | 12 November 2015 | US | 9660773 | B2 | 23 May 2017 |
| | | | | US | 10291366 | B2 | 14 May 2019 |
| | | | | US | 2017264400 | A1 | 14 September 2017 |
| | | | | KR | 20150127462 | A | 17 November 2015 |
| | | | | WO | 2015170892 | A1 | 12 November 2015 |
| | | | | KR | 2220934 | B1 | 26 February 2021 |

Form PCT/ISA/210 (patent family annex) (January 2015)